# FASCICULE DE BREVET EUROPEEN

(11) **EP 1 441 052 B1**
(45) Date de publication et mention de la délivrance du brevet: **26.07.2006**
(21) Numéro de dépôt: 04100103.3
(22) Date de dépôt: 14.01.2004
(51) Int. Cl.: F16L 11/10, D03D 15/00, F16L 58/16

(54) **Armature textile de renforcement unidirectionnel, apte à être enrubannée sur une structure mécanique à renforcer**
Unidirektional verstärkende Textilarmierung, geeignet zum Bandagieren einer zu verstärkenden mechanischen Struktur
Unidirectionally reinforcing textile reinforcement, for taping on a mechanical structure that has to be reinforced

(30) Priorité: 21.01.2003 FR 0300614
(43) Date de publication de la demande: 28.07.2004
(73) Titulaire: CHOMARAT COMPOSITES, 75002 Paris (FR)
(72) Inventeur: BAUDONNEL, Jacques, 07160, LE CHEYLARD (FR)
(74) Mandataire: Palix, Stéphane

(56) Documents cités:
- EP-A- 1 072 711
- FR-A- 2 828 722
- US-A- 6 165 586
- US-B2- 6 368 024

## Description

### Domaine technique

L'invention se rattache au domaine des textiles techniques, et plus précisément à celui des textiles utilisés pour former des armatures de renforcement. De tels textiles se présentent donc sous forme de rubans qui peuvent être enroulés sur une structure mécanique à renforcer. A titre d'exemple, on peut citer les renforcements des conduites utilisées dans le domaine du transport des fluides sous pressions. Ces conduites sont soumises à des contraintes de poids et de pression, voire de température, particulièrement élevées, ce qui nécessite qu'elles présentent des capacités de résistance mécanique particulièrement performantes.

L'invention vise à améliorer les performances de résistance à l'éclatement de telles conduites.

### Techniques antérieures

De façon générale, dans toutes conduites utilisées pour des applications assurant le transport de gaz ou fluides sous pression, on confère une résistance à l'éclatement en assurant l'enrubannage d'une conduite réalisée en matériau polymérique, avec un ruban de textile de haute performance enroulé en hélice. D'une manière générale, les rubans utilisés sont réalisés à base de fils de haute ténacité, tels que les fils d'aramide, les fils de verre ou les fibres de carbone, mais également les fils de polyester, de polyéthylène ou de polyamide. Ces rubans textiles sont généralement des rubans unidirectionnels chaîne, et ils sont obtenus par tissage avec des fils de trame de très faible titre, afin de limiter l'embuvage.

Ces rubans sont ensuite disposés sur la conduite initiale par un système de mise en place qui assure la réalisation de spires jointives. Plusieurs couches peuvent être nécessaires pour assurer un renfort optimal. Or, on constate fréquemment que la précision de ces machines de mise en place, n'est pas suffisante pour assurer la mise en place exactement jointive des différents tours de ruban. Il peut ainsi arriver que l'espace séparant le ruban d'une largeur de l'ordre de la dizaine de centimètres, atteigne plusieurs millimètres. L'existence de cet intervalle permet à la conduite enrubannée de se déformer par fluage sous l'effet de hautes pressions, et de générer donc une hernie au sein de l'enrubannage. Cette hernie constitue bien évidemment un point de faiblesse, notamment par cisaillement, sur lequel se concentrent de très fortes contraintes mécaniques qui peuvent aboutir à l'éclatement de la conduite. C'est pour cela que les solutions à base de fils de verre ne sont pas adaptées. Un autre inconvénient du verre est qu'il nécessite certaines précautions de manipulation pour conserver son intégrité. Ainsi, par comparaison avec les fils synthétiques, les fils de verre ne présentent pas une souplesse suffisante pour pouvoir être enroulés ou pliés tout en conservant une résistance en rapport.

A l'inverse, il peut arriver que, du fait de la faible précision des machines de mise en place du ruban, deux tours successifs de ruban se recouvrent légèrement, formant donc une surépaisseur localisée. Cette surépaisseur est ensuite accentuée par l'enroulement des couches supplémentaires, et forme donc un point de fragilisation de la conduite. Des phénomènes de glissement relatif entre couches sont également la source de fragilisation.

Une armature de renforcement apte à être enrubannée sur une structure mécanique à renforcer est connue de WO 03/016769 A1. Cette armature se présente sous la forme d'un ruban réalisé par tissage de fils de chaîne de haute ténacité, à base de fils synthétiques de hautes performances comme les aramides.

Ce ruban présente une zone centrale bordée de deux zones latérales, dont l'épaisseur est moindre que l'épaisseur de la zone centrale. Autrement dit, le ruban présente des bordures latérales qui sont plus fines que la zone centrale, ce qui autorise un léger recouvrement du ruban enroulé, sans générer de surépaisseur, ou au moins en limitant cette éventuelle surépaisseur.

De la sorte, lors de l'enrubannage, la machine mise en place peut être réglée pour provoquer ce léger recouvrement qui permet d'empêcher la formation de hernies, dont on a vu précédemment les conséquences préjudiciables en terme de résistance à l'éclatement. Ce léger recouvrement se produit sans forte surépaisseur, dont on a également vu précédemment qu'elle constituait un inconvénient des rubans de renforcement existant qui présentent une épaisseur constante sur toute leur largeur.

En pratique, les fils présents dans les zones latérales peuvent être de titre inférieur à ceux présents dans la zone centrale, ou plus généralement présenter une épaisseur moindre que les fils employés pour former la zone centrale.

Un objectif de l'invention est de permettre la réalisation d'un enrubannage qui permet d'assurer un léger collage des fils de chaîne, et donc un maintien de l'ensemble lorsque le ruban a subi une opération de chauffage. Un tel enrubannage possède une excellente résistance à l'éclatement, malgré l'utilisation de machines de mise en place d'une précision limitée.

### Exposé de l'invention

L'invention concerne donc une armature de renforcement apte à être enrubannée sur une structure mécanique à renforcer. Cette armature se présente sous la forme d'un ruban réalisé par tissage de fils de chaîne de haute ténacité, à base de fils synthétiques de hautes performances comme les aramides. Ce ruban présente une zone centrale bordée de deux zones latérales, dont l'épaisseur est moindre que l'épaisseur de la zone centrale. Conformément à l'invention, les fils de trame comportent au moins une fraction thermoplastique.

Selon une autre caractéristique de l'invention, on peut utiliser dans ces zones latérales, des fils qui possèdent une capacité d'allongement sous traction qui est supérieure à celle des fils de la zone centrale. De la sorte, les bordures du ruban peuvent légèrement se déformer dans les zones de recouvrement, et donc répartir les contraintes mécaniques dans ces zones particulières.

Dans certaines formes de réalisation, on peut utiliser dans la zone centrale des fils tordus, alors que les fils présents dans les zones de bordure sont sans torsion, ou avec une torsion très faible, de manière à optimiser les allongements relatifs entre les zones latérales et la zone centrale.

En pratique, les largeurs de chaque zone latérale représentent de 2 à 20 % environ de la largeur totale du ruban.

Dans une forme particulière de réalisation, on peut mettre en place sur une des faces du ruban, un film en matière thermoplastique qui permet d'assurer la protection du ruban vis-à-vis des autres couches, ainsi que la protection des fibres vis-à-vis des rayons ultra-violets, notamment dans le cas où les fils utilisés sont à base d'aramide.

### Description sommaire des figures

La manière de réaliser l'invention, ainsi que les avantages qui en découlent, ressortiront bien de la description du mode de réalisation donné à titre d'exemple, à l'appui de l'unique figure annexée, qui est une vue en perspective sommaire schématique d'un ruban conforme à l'invention.

### Manière de réaliser l'invention

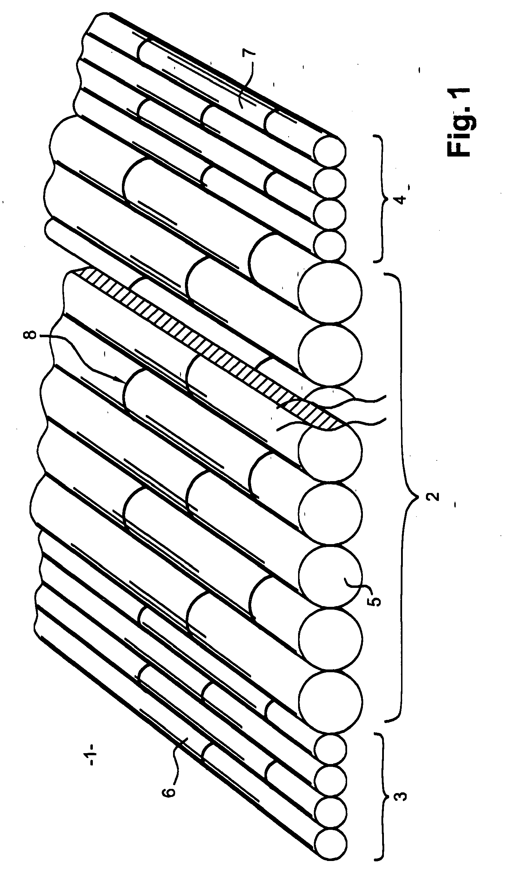

Le ruban unidirectionnel chaîne (1) décrit à la figure 1, présente une zone centrale (2), et deux zones latérales (3,4) formant les bordures du ruban. Les différents fils de chaîne (5,6,7) sont tissés avec des fils de trame (8).

En pratique, dans la forme illustrée, la zone centrale (2) présente une largeur comprise entre 10 et 200 mm, tandis que les zones latérales (3,4) présentent une largeur de l'ordre de 3 à 10 millimètres environ.

L'épaisseur des fils de chaîne (5) de la zone centrale est relativement importante, de l'ordre de 0,8 à 1 mm, tandis que les fils de chaîne (6,7) présents dans les zones latérales (3,4), présentent une épaisseur de l'ordre de 0,3 à 0,5 mm.

On a obtenu de bons résultats en utilisant comme fils de chaîne (5) dans la zone centrale, des fils à base d'aramide, de méta-aramide ou para-aramide. Mais l'invention couvre également l'utilisation de fils considérés comme équivalents à l'aramide en termes de résistance mécanique alliée à une bonne flexibilité. Ainsi en est il des fils synthétiques tels le polyester aromatique ou le polyéthylène haute ténacité, ou des fils spéciaux comme à base de cristaux liquides

Les fils de chaîne (5) peuvent être des fils multi-filaments avec torsion ou non, ou des fils retors, d'un titre allant de 330 à 680 tex, et par exemple avec une torsion de 60 tours, et préférentiellement avec une alternance de fils tordus dans le sens Z et dans le sens S. Cette utilisation des deux sens de torsion permet de conserver la planéité du ruban, et d'éviter les phénomènes de vrillage.

Les fils de chaîne (6,7) utilisés dans les zones latérales (3,4) peuvent être des fils continus ou des fils obtenus à partir de filés de fibres, de manière à posséder un allongement supérieur aux fils de la zone centrale. Les mêmes fils d'aramide peuvent être employés dans les zones latérales que ceux utilisés pour la zone centrale. En pratique, il est ainsi possible de réaliser des rubans qui présentent d'excellentes propriétés mécaniques de résistance à la traction, typiquement de l'ordre ou supérieure à une tonne par centimètre de largeur.

Dans ce tissage de ruban de haut module, en trame, les fils utilisés peuvent par exemple être des fils de polyester enduits d'un matériau thermoplastique, de manière à posséder un titre de l'ordre de 40 tex, ou bien encore des fils de verre enduit à base de matériau thermoplastique. Ces fils possèdent alors un titre de l'ordre de 20 à 70 tex, et sont sans torsion. Il est à noter que les fils de trame sont de titre nettement inférieur à ceux des fils de chaîne, typiquement dans un rapport d'au moins 1 à 10, afin de générer pour les fils de chaîne le plus faible embuvage possible. La fonctionnalité de ces fils de trames est d'assurer le maintien de la disposition géométrique des fils de chaîne , même sous faible tension lors de la manipulation et la mise en oeuvre ultérieures du ruban. Ce fil de trame peut être unique ou double à chaque insertion, selon le choix du matériel de tissage. Ce file de trame parcourt alternativement toute la largeur du tissu en étant continu sur toute la longueur du ruban, sans nécessiter donc de couture ou de formation de lisières.

Il ressort de ce qui précède que le ruban conforme à l'invention peut être enrubanné en générant des zones de recouvrement qui assurent une continuité du renforcement sur toute la surface recouverte. Ces zones de recouvrement ne génèrent toutefois pas de surépaisseur ou de zones formant des points de fragilité, comme c'est le cas avec des rubans de l'art antérieur. Le recouvrement des zones latérales autorise l'emploi de moyen de pose moins complexes et plus rapides que ceux utilisés à ce jour, avec donc des gains en termes de coût de fabrication.

Ce ruban peut être utilisé dans de très nombreuses applications, dans lesquelles il est soit utilisé en tant que tel, soit encore imprégné d'une résine thermodurcissable. Il peut ainsi être employé dans la fabrication de conduites, tuyaux, et autres pièces de révolution, mais également dans le renforcement d'ouvrages d'art existant, telles que des piles de pont.

## Revendications

1. Armature textile de renforcement unidirectionnel (1) apte à être enrubannée sur une structure mécanique à renforcer, ladite armature étant formée d'un ruban réalisé par tissage de fils de chaîne (5) synthétiques de haute ténacité à base d'aramide notamment, qui présente une zone centrale (2) bordée de deux zones latérales (3,4), dont l'épaisseur est moindre que celle de la zone centrale, **caractérisée en ce que** les fils de trame comportent au moins une fraction thermoplastique.

2. Armature selon la revendication 1, ***caractérisée* en ce que** les fils (6,7) présents dans les zones latérales (3,4), sont de titre inférieur à ceux présents dans la zone centrale (2).

3. Armature selon la revendication 1, ***caractérisée* en ce que** les fils (6,7) présents dans les zones latérales (3,4) présentent une épaisseur moindre que ceux présents dans la zone centrale (2).

4. Armature selon la revendication 1, ***caractérisée* en ce que** les fils (6,7) présents dans les zones latérales (3,4) présentent une capacité d'allongement sous traction supérieure à celle des fils de la zone centrale (2).

5. Armature selon la revendication 1, ***caractérisée* en ce que** les fils (5) de la zone centrale sont tordus, les fils (6,7) présents dans les zones latérales étant sans torsion.

6. Armature selon la revendication 1, ***caractérisée* en ce que** les largeurs de chaque zone latérale représentent de 2 à 20 % de la largeur du ruban.

7. Armature selon la revendication 1, ***caractérisée* en ce que** au moins une des faces du ruban comporte un film de protection en matière thermoplastique.

## Claims

1. A unidirectional textile reinforcing sheath (1) capable of being taped onto a mechanical structure to be reinforced, said sheath being formed from a tape produced by the weaving of high-strength synthetic warp threads (5) based on aramid, in particular, which has a central zone (2), bordered by two lateral zones (3, 4), the thickness of which is less than that of the central zone, **characterized in that** the weft threads comprise at least one thermoplastic fraction.

2. The sheath as claimed in claim 1, **characterized in that** the threads (6, 7) present in the lateral zones (3, 4) have a linear density lower than those present in the central zone (2).

3. The sheath as claimed in claim 1, **characterized in that** the threads (6, 7) present in the lateral zones (3, 4) have a thickness less than those present in the central zone (2).

4. The sheath as claimed in claim 1, **characterized in that** the threads (6, 7) present in the lateral zones (3, 4) possess a capacity for elongation under traction greater than that of the threads of the central zone (2).

5. The sheath as claimed in claim 1, **characterized in that** the threads (5) of the central zone are twisted, the threads (6, 7) present in the lateral zones being twist-free.

6. The sheath as claimed in claim 1, **characterized in that** the widths of each lateral zone represent from 2 to 20% of the width of the tape.

7. The sheath as claimed in claim 1, **characterized in that** at least one of the faces of the tape comprises a protective film of thermoplastic material.

## Patentansprüche

1. Unidirektional verstärkende Textilarmierung (1), welche zum Umwickeln einer zu verstärkenden mechanischen Struktur geeignet ist, wobei die Armierung von einem Band gebildet ist, das durch Verweben von synthetischen Kettfäden (5) mit hoher Reißfestigkeit auf der Basis insbesondere von Aramid gefertigt ist und das einen mittleren Bereich (2) aufweist, der von zwei Seitenbereichen (3, 4) gesäumt ist, deren Dicke geringer ist als die des mittleren Bereichs, **dadurch gekennzeichnet, dass** die Schussfäden wenigstens einen Anteil aus Thermoplast umfassen.

2. Armierung nach Anspruch 1, **dadurch gekennzeichnet, dass** die in den Seitenbereichen (3, 4) vorhandenen Fäden (6, 7) einen geringeren Titer aufweisen als die im mittleren Bereich (2) vorhandenen.

3. Armierung nach Anspruch 1, **dadurch gekennzeichnet, dass** die in den Seitenbereichen (3, 4) vorhandenen Fäden (6, 7) eine geringere Dicke aufweisen als die im mittleren Bereich (2) vorhandenen.

4. Armierung nach Anspruch 1, **dadurch gekennzeichnet, dass** die in den Seitenbereichen (3, 4) vorhandenen Fäden (6, 7) eine höhere Zugdehnungsfähigkeit als die Fäden des mittleren Bereichs (2) aufweisen.

5. Armierung nach Anspruch 1, **dadurch gekennzeichnet, dass** die Fäden (5) des mittleren Bereichs gedreht sind, wobei die in den Seitenbereichen vorhandenen Fäden (6, 7) nicht gedreht sind.

6. Armierung nach Anspruch 1, **dadurch gekennzeichnet, dass** die Breiten jedes Seitenbereichs 2 bis 20 % der Breite des Bandes ausmachen.

7. Armierung nach Anspruch 1, **dadurch gekennzeichnet, dass** wenigstens eine der Seiten des Bandes einen Schutzfilm aus Thermoplast aufweist.
